# EUROPÄISCHE PATENTANMELDUNG

(11) **EP 2 296 340 A2**
(43) Veröffentlichungstag der Anmeldung: **16.03.2011**
(21) Anmeldenummer: 10009523.1
(22) Anmeldetag: 14.09.2010
(51) Int. Cl.: H04L 29/06

(54) **Verfahren zum Betreiben eines Firewallgerätes in Automatisierungsnetzwerken**

(30) Priorität: 14.09.2009 DE 102009041100
(71) Anmelder: Hirschmann Automation and Control GmbH, 72654 Neckartenzlingen (DE)
(72) Erfinder: Reister, Klaus, 73265 Dettingen/Teck (DE); Stuckert, Andreas, 70435 Stuttgart (DE); Erne, Heiner, 89150 Laichingen (DE)
(74) Vertreter: Greif, Thomas

(57) **Zusammenfassung**

Die Erfindung betrifft ein Verfahren zum Betreiben eines Firewallgerätes in Automatisierungsnetzwerken, wobei das Firewallgerät zwischen zumindest zwei ein oder mehrere Infrastrukturgeräte aufweisende Netzwerken angeordnet und dazu geeignet und ausgebildet ist, Datenverkehr in Abhängigkeit von Regeln zwischen den Netzwerken passieren zu lassen oder die Übertragung zwischen den Netzwerken zu blockieren, und während einer Lernphase aus dem Datenverkehr Daten zu erfassen und Regeln abzuleiten, ohne physikalisch in den Datenverkehr einzugreifen.

## Beschreibung

Die Erfindung betrifft ein Verfahren zum Betreiben eines Firewallgerätes in Automatisierungsnetzwerken gemäß den Merkmalen des Oberbegriffes des Patentanspruches 1.

Von der Anmelderin, der Hirschmann Automation and Control GmbH, ist es bekannt, dass sie ein umfassendes Angebot an Infrastrukturgeräten für den Einsatz von Ethernet in Feld-, Kontroll- und Leitebene von Automatisierungsnetzen (Automatisierungsnetzwerke) anbietet. Mit der Vernetzung von Infrastrukturgeräten, die zu einer Automatisierungszelle zusammengefasst sind, mit Hilfe von Industrial-Ethernet basierten Infrastrukturgeräten kommen in nachteiliger Weise auch die sicherheitstechnischen Aspekte wie Zugriffsschutz, Datensicherheit und dergleichen zum Tragen. So ist beispielsweise als ein Firewallgerät das von der Anmelderin vertriebene Security-Device EAGLE 20 bekannt, wobei dieses Gerät ein 2-Port-Router mit integrierter Firewall, Virtual Private Network (VPN) und Network Address Translation (NAT) ist.

Der Einsatzzweck dieses Gerätes ist unter anderem das Abschotten von Automatisierungszellen untereinander und gegenüber Firmennetzwerken, das Aufbauen von sicheren Verbindungen zu anderen Standorten sowie das Herstellen von Serviceverbindungen zum Warten von Anlagen, wie beispielsweise verfahrenstechnischen oder produktionstechnischen Anlagen.

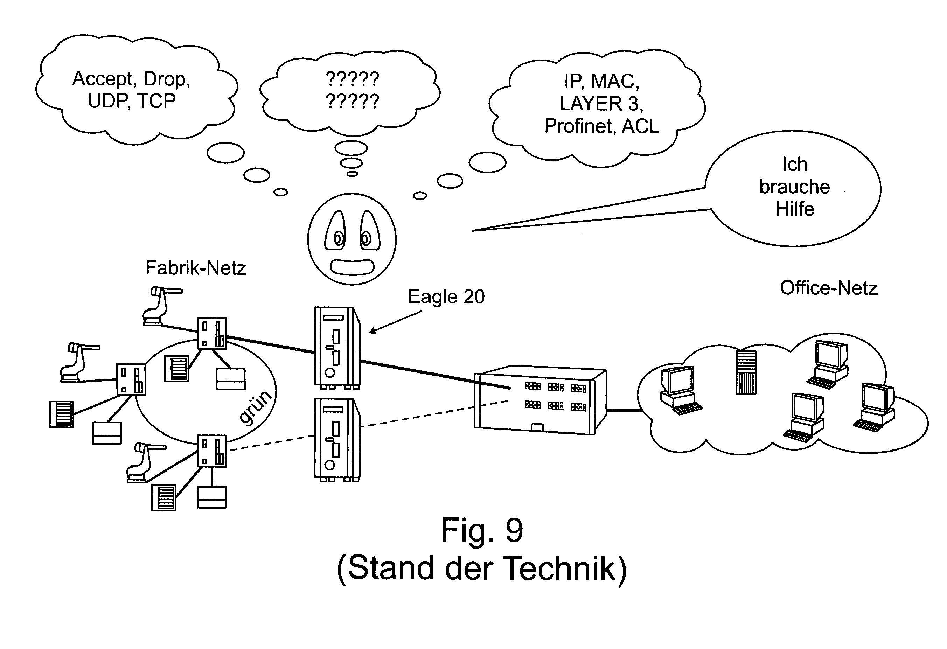

Der Einsatz eines solchen bekannten Firewallgerätes (im Folgenden auch mit der Bezeichnung "EAGLE 20" versehen) ist in den Figuren 9 bis 11 dargestellt, die den Stand der Technik repräsentieren. Figur 9 zeigt einen typischen Ausschnitt aus einem Automatisierungsnetz (im Folgenden wird der Begriff Netz und der Begriff Netzwerk synonym zueinander verwendet) auf Basis von Ethernet und dessen Anbindung an ein Office-Netzwerk über das Firewallgerät EAGLE 20 und einen Backbone-Switch.

Die Aufgabe des Anlagenführenden (auch Betreuer, Benutzer oder Administrator genannt) ist nun neben der Konfiguration seiner Automatisierungsanlage, die Firewall des Fireyvallgerätes EAGLE 20 zu konfigurieren, um die Sicherheit im Automatisierungszweig zu gewährleisten, das heißt, darauf zu achten und das Firewallgerät so zu konfigurieren, dass nur ein gewünschter Datenverkehr zwischen dem Fabrik-Netz und dem Office-Netz stattfindet, jedoch unerwünschter Datenverkehr (wie beispielsweise Spam-Mail) unterbunden wird.

Hierbei ist eine Vielzahl von Situationen denkbar, die der Betreuer des Automatisierungsnetzwerkes bei der Konfiguration seiner Firewall beziehungsweise des Firewallgerätes berücksichtigen muss. Diese Situationen können beispielsweise die folgenden sein:
1. Er möchte den Zugriff vom Office-Netz durch Infrastrukturgeräte wie Drucker, Clients und dergleichen ins Automatisierungsnetz verhindern,
2. Multicasts und Broadcasts des Automatisierungsnetzes sollen dieses nicht verlassen können,
3. eingehende und ausgehende sichere Verbindungen vom und ins Internet zu Zwecken der Wartung sollen durchgelassen werden können (zum Beispiel mittels VPN-Verbindungen),
4. der Zugriff von einzelnen Clients aus dem Office-Netz auf Clients oder andere Infrastrukturgeräte des Automatisierungsnetzes sollen möglich sein,
5. Abschotten mehrerer Automatisierungszellen (Teilnetzwerke des Automatisierungsnetzes) voneinander (Firewall-NAT) oder Einschränken deren Kommunikation,
6. Zugriff auf bestimmte Server im Office-Netz soll ermöglicht sein, da dort zum Beispiel Daten für Aktoren im Automatisierungsnetz, wie beispielsweise für Stellantriebe von Fräsmaschinen, liegen.

Das Regelwerk einer Firewall, das heißt der Betrieb und das Betriebsverfahren des Firewallgerätes, kann sehr komplex werden, da es möglich sein soll, für jede Art des Datenverkehrs Regeln anzulegen, mit denen der Datenverkehr, soweit gewollt, die Firewall passieren kann und der Datenverkehr dann blockiert wird, wenn er aus vorgebbaren Gründen nicht zugelassen werden soll. Durch die verschiedenen Topologien und Anforderungen ist es jedoch schwierig bis nahezu unmöglich bei komplexen Netzwerken, solche Firewalls nach einem vorgegebenen festen Raster zu konfigurieren. Dies ist jedoch unbedingt nötig, da gerade in Folge von unerwünschtem Datenverkehr die Aufgabe des Inhaltes des Datenverkehres, nämlich mit den darin enthaltenen Daten die Aufgaben des Automatisierungsnetzes zu steuern beziehungsweise zu regeln, erst ermöglicht wird. So kann es zum Beispiel vorkommen, dass bei unerwünschtem Datenverkehr der technische Betrieb des Automatisierungsnetzes und damit einhergehend der Betrieb einer gesamten produktions- oder verfahrenstechnischen Anlage eingeschränkt oder unmöglich gemacht wird. Das bedeutet, dass mit dem Firewallgerät beziehungsweise mit einem Verfahren zu dessen Betreiben der technische Betrieb einer solchen Anlage erhalten werden soll beziehungsweise sichergestellt werden soll, so dass der Betrieb entweder gar nicht oder in nicht nennenswerter Weise durch unerwünschten Datenverkehr gestört wird.

Dazu ist es erforderlich, dass Regeln für den Datenverkehr (Firewall-Regeln) aus dem bestehenden Datenverkehr abgeleitet werden. Die Firewalls, die auf Personal Computern in der Büroumgebung installiert sind, treten hierzu mit dem Benutzer des PCs in Interaktion. Auf Embedded-Geräten wie Infrastrukturgeräten eines Automatisierungsnetzwerkes ist dieses jedoch nicht möglich, da die Firewall verständlicherweise nicht mit einer Maschine, einem Sensor, einem Aktuator oder dergleichen in Interaktion treten kann. Deshalb werden bei solchen Embedded-Geräten die Verbindungsdaten des Datenverkehrs innerhalb einer gewissen Zeit gesammelt, wozu sich verschiedene Methoden im Stand der Technik etabliert haben.

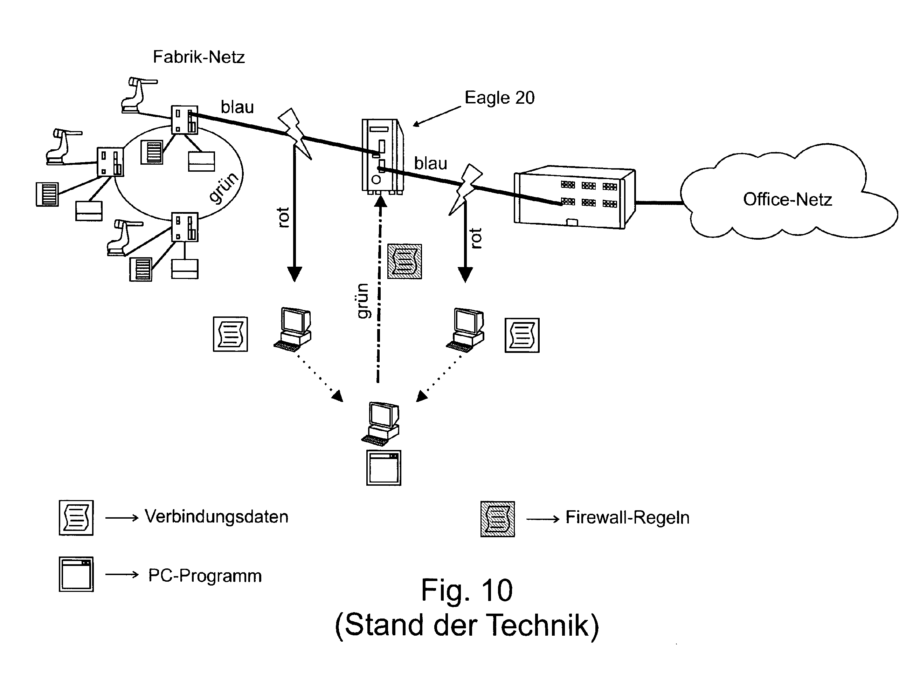

Die eine Methode ist die Datenbeschaffung außerhalb des Gerätes. Diese Datenbeschaffung ist durch die Verwendung eines externen Analyse-Tools möglich, das den Verkehr an den ein- und ausgehenden Schnittstellen beobachtet und mitschneidet. Ein solches System ist beispielhaft in der Figur 10 dargestellt. Zum Beobachten und Mitschneiden des Verkehrs an den ein- und ausgehenden Schnittstellen muss das Netzwerk an diesen Stellen geöffnet werden, um sich physikalisch in das Netzwerk einzuklinken. Die Daten werden von einem PC aufgenommen (rot) und zusammengeführt (orange). Anschließend werden die Daten ausgewertet und die entstehenden Regelsätze auf das jeweilige Infrastrukturgerät des Fabrik-Netzes (grün, linke Seite der Figur 10) eingespielt. Dies kann über einen ACA, seriell oder über das Netzwerk geschehen. Es ist auch möglich, sich diese Informationen an den angrenzenden Infrastrukturgeräten mittels einer Portspiegelung zu beschaffen. Jedoch ist auch hier ein physikalischer Eingriff in nachteiliger Weise nötig, um die Verbindung herzustellen.

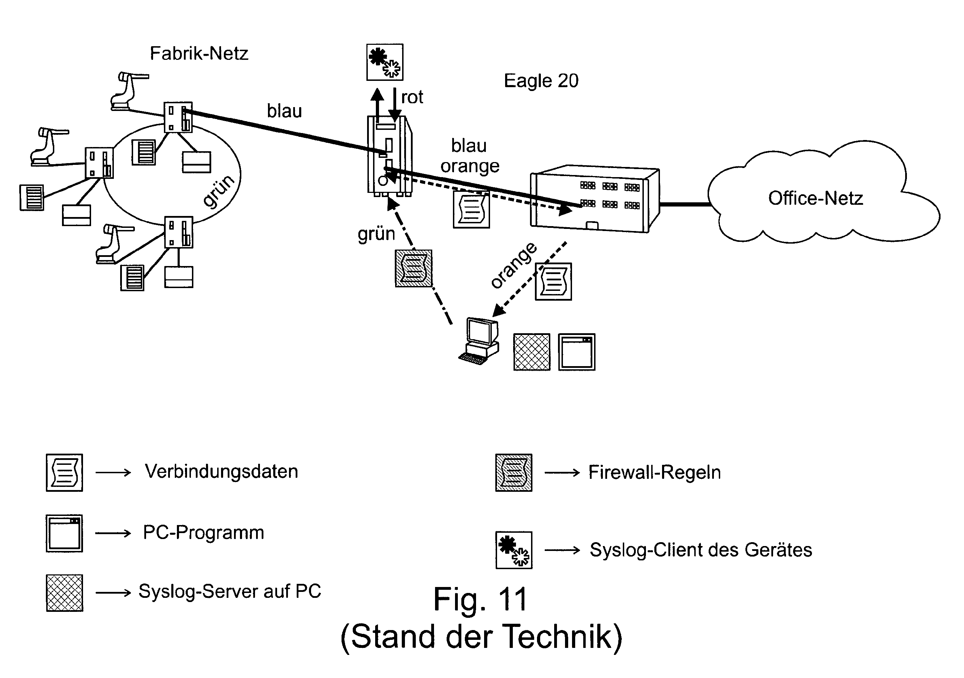

Eine weitere Möglichkeit besteht in der Datenbeschaffung innerhalb des Gerätes, wie es exemplarisch in Figur 11 dargestellt ist. Die Daten zwischen dem Office-Netz und dem Fabrik-Netz werden live zum Beispiel über einen Syslog-Client (rot), welcher im Gerät integriert wird, an einen PC übertragen (orange), auf dem ein Syslog-Server betrieben wird. Diese Übertragung kann entweder wie in Figur 11 abgebildet über das Netzwerk oder über eine serielle Schnittstelle geschehen. In beiden Fällen wird in nachteiliger Weise entweder das Netzwerk oder die serielle Schnittstelle physikalisch belastet, worunter die Performance der Datenübertragung leidet. Auf dem PC erfolgt dann die Übertragung der Daten auf eine auf dem PC installierte Applikation. Während des Lernvorganges der Firewall (EAGLE 20) muss mindestens der Syslog-Server in nachteiliger Weise permanent geöffnet sein.

Im Gegensatz hierzu liegt der Erfindung die Aufgabe zugrunde, ein Verfahren zum Betreiben eines Firewallgerätes bereitzustellen, mit dem die eingangs geschilderten Nachteile vermieden werden. Mit dem Verfahren soll insbesondere auf der einen Seite die Performance des Datenverkehrs nicht eingeschränkt werden und andererseits sollen zur Realisierung des erwünschten Datenverkehrs zwecks Steuerung und / oder Regelung technischer Prozesse beziehungsweise zur Unterscheidung von unerwünschtem und erwünschtem Datenverkehr zwischen zwei Netzwerken Regeln für diesen Datenverkehr aus dem tatsächlich bestehenden Datenverkehr abgeleitet werden, ohne dass dadurch in den schon bestehenden Datenverkehr zwischen den zumindest zwei Netzwerken eingegriffen werden muss.

Diese Aufgabe ist durch die Merkmale des Patentanspruches 1 gelöst.

Insgesamt ist ein Verfahren zum Betreiben eines Firewallgerätes in Automatisierungsnetzwerken vorgesehen, wobei das Firewallgerät zwischen zumindest zwei ein oder mehrere Infrastrukturgeräte aufweisende Netzwerken angeordnet und dazu geeignet und ausgebildet ist, Datenverkehr in Abhängigkeit von Regeln zwischen den Netzwerken passieren zu lassen oder die Übertragung zwischen den Netzwerken zu blockieren, und während einer Lernphase aus dem Datenverkehr Daten zu erfassen und Regeln abzuleiten, ohne physikalisch in den Datenverkehr einzugreifen. Dadurch ist es möglich, Regeln für den Datenverkehr, genauer das Passieren lassen oder Blockieren von Datenverkehr, aus dem tatsächlich erfassten Datenverkehr abzuleiten, wozu dies während einer Lernphase geschieht, ohne dass physikalisch in den tatsächlichen Datenverkehr zwischen den zumindest zwei Netzwerken eingegriffen werden muss. Dies erhöht zum Einen die Flexibilität bei der Erstellung der Regeln der Firewall zur Unterscheidung von erwünschtem und erwünschtem Datenverkehr und beeinflusst zum Anderen gar nicht oder nur in nicht nennenswerter Weise die Performance des Datenaustausches zwischen den zumindest zwei Netzwerken. Dies hat in der Folge den weiteren Vorteil, dass nicht nur die Performance des Datenaustausches nicht oder nur unwesentlich beeinträchtigt wird, sondern dass auch der dahinterliegende Automatisierungsprozess nicht oder nur in nicht nennenswerter Weise beeinträchtigt wird.

Dieses Verfahren muss kein extern installiertes Programm sein, sondern kann komplett in dem Firewallgerät integriert sein. Es besteht aus zwei Teilen. Die Erfassung, Haltung (Speicherung) und Voroptimierung der Daten wird in einem in dem Firewallgerät eingebetteten Prozess durchgeführt. Die Optimierung und Bearbeitung des Regelsatzes ist Teil eines web-basierten Interfaces (Management). Für das Bedienen dieses Interfaces ist lediglich ein Webbrowser nötig, mit dem ein Benutzer wie zum Beispiel ein Systemadministrator in unkomplizierter Weise von außen auf das Firewallgerät zugreifen und dieses bedienen kann.

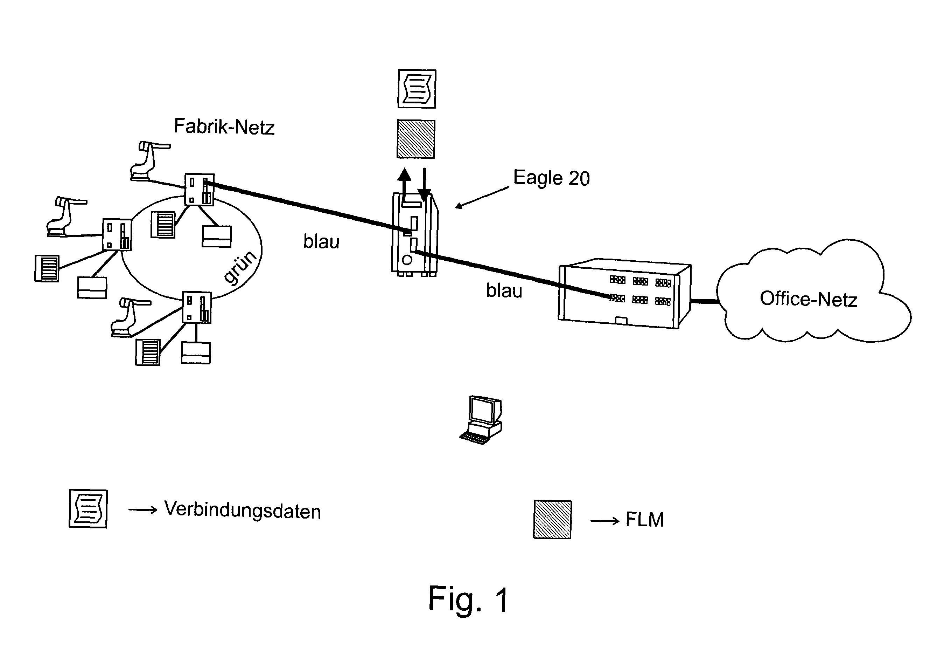

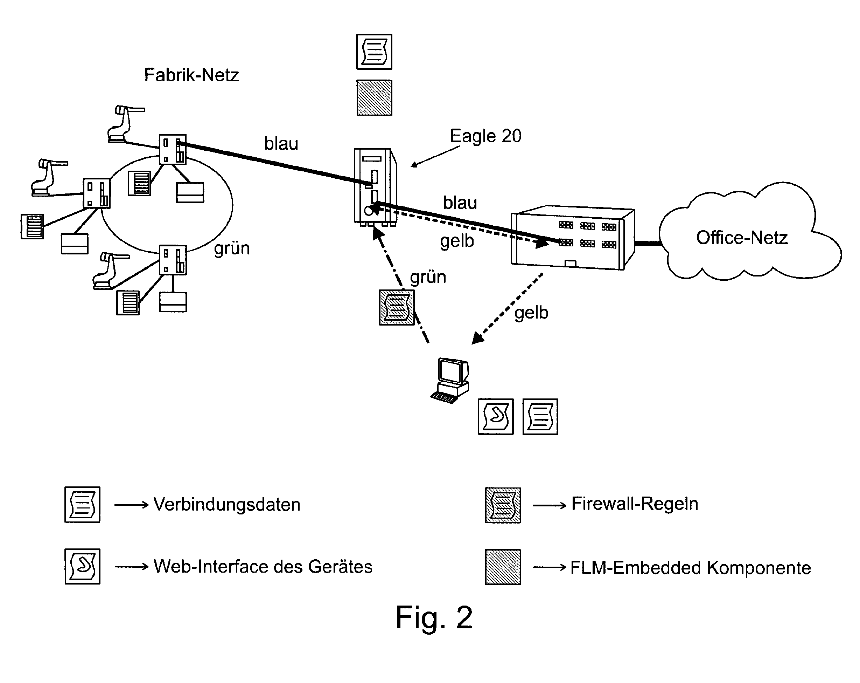

Die weiteren Ausgestaltungen des erfindungsgemäßen Verfahrens sind in den Unteransprüchen angegeben, aus denen die entsprechenden Vorteile resultieren, und werden im Zusammenhang mit den Figuren 1 bis 8 im Folgenden näher beschrieben.

Figur 1 zeigt das Firewallgerät (EAGLE 20) während der Datenerfassung, also beim Lernen (Lernphase) oder auch beim Testen. Während dieser Lernphase (oder auch bei der Testphase) läuft das Gerät vollkommen autark, so dass keine geöffnete Verbindung zum Management oder zu einer externen Anwendung notwendig ist.

Der Datenverkehr zwischen dem Office-Netz und dem Fabrik-Netz läuft dabei über eine Netzwerkverbindung (blau), in die das Firewallgerät zwischengeschaltet ist, ohne jedoch physikalisch in den Datenverkehr einzugreifen.

Um den täglichen Einsatz und die Konfigurierbarkeit der Firewall auf dem Firewallgerät für den Kunden zu verbessern, entstand die Idee eines Lernmodus für die Firewall. Durch Mithören und Analysieren des Netzwerkverkehrs soll das Gerät geeignete Firewall-Regeln ableiten, sie optimieren und dem Benutzer die Möglichkeit geben, die vorgeschlagenen Regeln zu bearbeiten, zu verwerfen oder anzunehmen. Die Applikation ermöglicht es, die erlernten Regeln zu testen. Dieser Modus wird im folgenden Verlauf als "Firewall-Learning-Mode" (FLM) bezeichnet.

In diesem Zusammenhang sind für das erfindungsgemäße Verfahren zum Betreiben des Firewallgerätes folgende Punkte relevant, die auch in den Unteransprüchen angegeben sind:
1.
   Bei bekannten Systemen ist es erforderlich, sich entweder physikalisch in die Netzwerkstruktur einzuklinken, was sich im industriellen Umfeld meist schwierig gestaltet, oder die Verbindungsinformationen durch den Einsatz externer Analysesoftware zu erfassen. Dies ist mit dem erfindungsgemäßen Verfahren zum Betreiben des Firewallgerätes nicht erforderlich, da dieses physikalisch nicht in den Datenverkehr eingreift.
2.
   Die Verbindungsdaten werden während der Lernphase beziehungsweise während der Testphase nicht nach außen übertragen, sondern auf dem Gerät selber vorgehalten (das heißt dort erfasst und abgespeichert).
3.
   Die Sammlung der Daten auf dem Gerät ermöglicht die Vorfilterung der Verbindungsdaten und verhindert das Verfälschen des Netzwerkverkehrs durch Spiegelung einzelner Ports der Infrastrukturgeräte sowie Übertragung von Informationen innerhalb der Lernphase. Ein normaler uneingeschränkter Produktivbetrieb (gegebenenfalls mit nur kleinen Performanceeinbußen) bleibt möglich.
4.
   Die Datenerfassung setzt nicht auf den Interfaces der einzelnen Infrastrukturgeräte direkt auf, sondern klinkt sich in die interne Firewall ein. Dies macht es zum Einen möglich, dass die Sicherheitsfunktion des Firewallgerätes während des Lernens erhalten bleibt (zumindest ist eine Default-Paketfilterung aktiv) und zum Anderen schont es die Leistungsreserven des Firewallgerätes und hält die Performanceeinbuße des gesamten Netzwerkbetriebes gering.

Zwecks Optimierung werden nach der Lernphase (oder der Testphase) die erfassten und vorgefilterten Daten in das vom Gerät geladene und auf dem Browser ausgeführte Web-Interface übertragen. Dieses startet dann einen Optimierungsalgorithmus. Während der Optimierung muss das Gerät Kontakt zum Management haben. Die optimierten und bearbeiteten Regeln können nun in einer Art Testmodus auf Tauglichkeit überprüft werden. Nach dem Testmodus wird abermals optimiert und die eventuell neu ermittelten Regeln dem Benutzer zur Überarbeitung angeboten. Die vom Benutzer für in Ordnung befundenen Regeln werden dann über die Management-Schnittstelle an das Gerät übertragen und aktiviert.

Aus den ermittelten Kommunikationsbeziehungen werden einzelne Firewall-Regeln gebildet. Jede Kommunikationsbeziehung ergibt eine vorläufige Firewall-Regel. Anschließend muss das Regelset reduziert werden, was über die Optimierung der Regeln geschehen soll. Mit der Regeloptimierung wird eine bessere Performance erzielt sowie die Übersichtlichkeit des Regelwerks gewährleistet.

Dabei ist zu beachten, dass der Regelsatz bei der Optimierung einerseits möglichst klein gehalten werden soll, er andererseits jedoch einen möglichst hohen und selektiven Schutz vor unerwünschtem Verkehr ermöglichen soll.

Folgende Kriterien können in die Optimierung einfließen:
1. Reduzierung der Regeln durch Zusammenfassung zu Subnetzregeln sowohl auf der Destination- als auch auf der Source-Seite.
2. Zusammenfassung von Ethertypes (Layer 2), Ports und Protokollen (Layer 3) zu Gesamtregeln, z.B. das Erlauben von bestimmten Ethertypes oder Protokollen.
3. Optimierung der Reihenfolge der Regeln nach ihrer Schärfe: Unscharfe Regeln (z.B. Subnetzregeln) werden im Regelset weiter nach vorne und scharfe Regeln (Paketregeln für einzelne IPs) weiter nach hinten gestellt.
4. Optimierung hinsichtlich der Häufigkeit des Auftretens einer Verbindung.

Betrachtet man eine Firewall-Regel für Layer 3, besteht sie aus den Parametern Quell-IP-Adresse, Ziel-IP-Adresse, Quellport und Zielport sowie dem Protokoll. Eine Optimierungsmöglichkeit ergibt sich dann, wenn mehrere Regeln an einem oder mehreren Parametern gleiche oder ähnliche Werte besitzen, die ein Zusammenfassen ermöglichen (z.B. Subnetzmasken, Portranges). Da es sich jedoch um 5 voneinander nahezu unabhängige Parameter handelt, ergeben sich für jeden Parameter Optimierungsmöglichkeiten, die sich meist über verschiedene Regeln erstrecken. So ergeben sich sortierte Mengen, die sich an verschiedenen Punkten überschneiden, wobei jede Regel mit entweder keinem oder mit bis zu 5 Parametern in den Überschneidungsmengen liegen kann.

Das Optimierungssystem muss nun in der Lage sein, diese Überschneidungen nach einem Bewertungssystem zu bewerten sowie zu ermitteln, welche der Optimierungsmöglichkeiten die bestehe bzw. eine hinreichend gute Optimierungsmöglichkeit darstellt.

Ein denkbarer Ansatz zur Lösung des Problems ist es, die Parameter in nahezu ausgeglichenen Bäumen (z.B. AVL-ausgeglichenen Bäumen) abzulegen. Eine Liste würde die Parameter einer Regel zu einem Regelsatz verketten, zu jedem Parameter wäre in dieser Liste vermerkt, wo seine Position im Baum ist.

Gleiche Parameter zeigen sich in AVL-Bäumen dadurch, dass sie untereinander liegen, ähnliche Parameter dadurch, dass sie sich innerhalb eines Astes befinden.

Nun kann man diese zusammenfassen und die Bäume somit verkleinern. Gleichzeitig wird die Liste der Regeln (die ja auch die Positionen in den entsprechenden Parameterbäumen beinhalten) zu einem nicht-binären Regelbaum umgebaut werden, in welchem jeder zusammengefasste Knoten eine optimierte Regel darstellt und dessen Kinder die Regeln darstellen, aus denen die optimierte Regel besteht. An welchen Stellen und wie nach Übereinstimmungen gesucht wird, geschieht nach festgelegten Suchmustern, welche nacheinander ausgeführt werden. Mögliche Suchmuster wären beispielsweise: "Suche nach allen Regeln, die die Subnetzmaske des internen Netzes haben" oder"Suche nach allen Regeln, die den Portrange xxxxx-zzzzz haben". Die Schwierigkeit bei der Entwicklung der Suchmuster ist es, diese so auszubalancieren, dass sie mit den vielfältigen Möglichkeiten der Zusammensetzung der Bäume, die im Primären durch den Einsatzort des Firewallgerätes bestimmt werden, zurechtkommen und den Besonderheiten des Einsatzortes Rechnung tragen können. In diesem Falle wären die Suchmuster statisch und müssten hinterlegt werden. Es wäre jedoch durchaus möglich, die Suchmuster dynamisch oder zumindestens teilweise dynamisch zu erstellen.

Über jeden Parameterbaum könnten statistische Werte wie Streuung, Tiefe, Anzahl der verschiedenen Werte usw. gesammelt werden. Mit Hilfe eines Neuronalen Netzes kann der Charakter der Bäume ermittelt sowie die Suchstrategie angewandt werden, die für das ermittelte Szenario als gut befunden wurde. Je nach Belernung des Neuronalen Netzes kann diese von der Entscheidung über die Verwendung eines bestimmten festgelegten Satzes an Suchmustern bis hin zur vollkommen dynamischen Erstellung von Suchmustersätzen reichen.

Die Darstellung der optimierten Regeln, die sich aus den erfassten Daten ergeben, erfolgt in einer Baumstruktur, in der die optimierten Regeln als Knotenpunkte (Eltern) der Struktur erscheinen und die dazugehörigen Einzelregeln als Blätter (Kinder). Es ist möglich, dass eine optimierte Regel Ergebnis mehrerer optimierter Regeln ist. Dabei bleibt erkennbar aus welchen Regeln eine optimierte Regel entstanden ist.

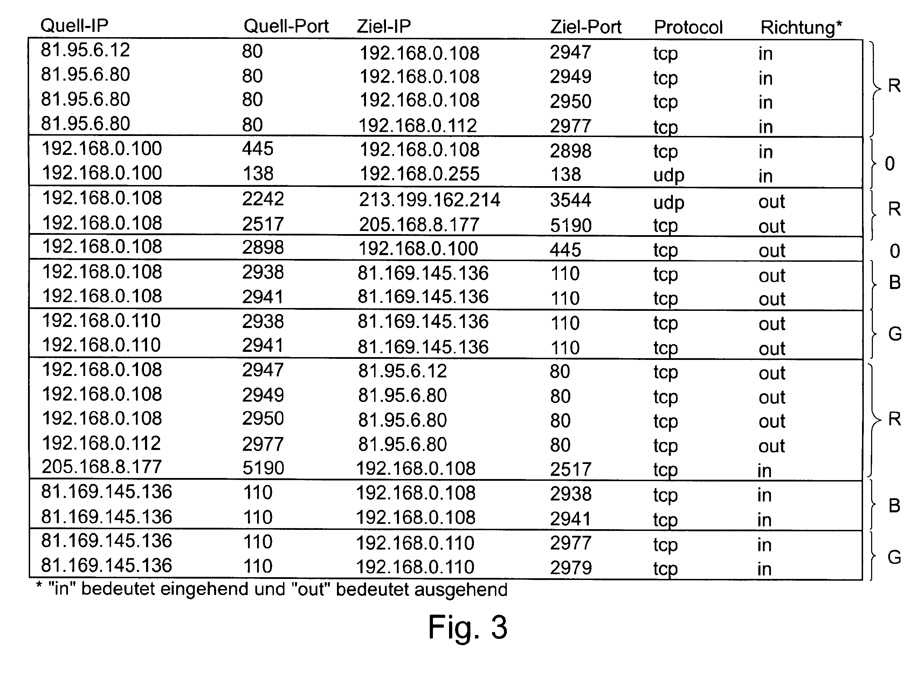

Dies lässt sich am besten durch ein Beispiel darstellen. Die Tabelle in Figur 3 stellt einen kleinen Ausschnitt der erhaltenen Verbindungsdaten dar, wie sie bei einem kleineren Automatisierungsnetzwerk mit Zugang zum Internet aussehen könnte. Gegeben sind hier z.B. die Verbindung zu einem Mailserver (Blau B und Grün G), eine Rechner zur Rechner Verbindung (Orange O) und der Internetverkehr zu verschiedenen Webseiten (Rot R).

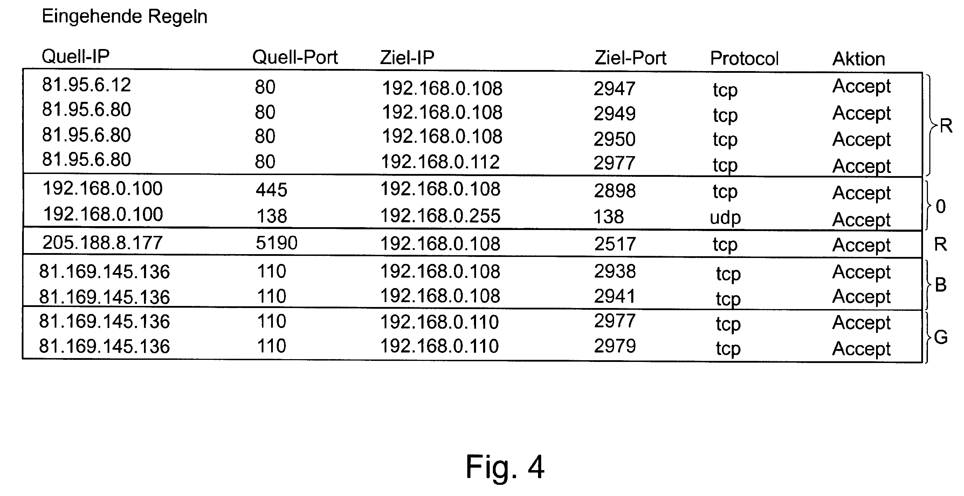

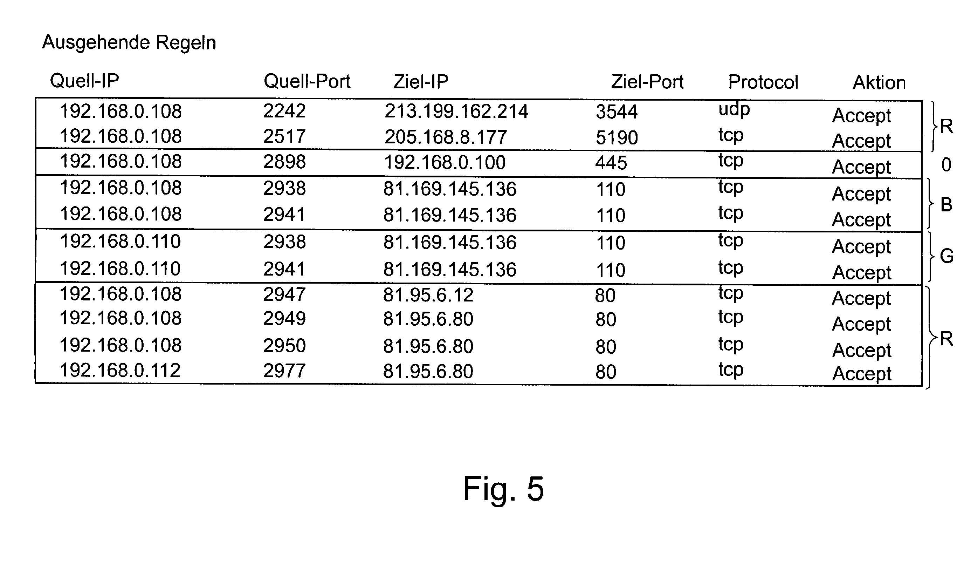

Aus diesen Rohdaten werden nun Einzelregeln erstellt, welche wie in Figur 4, 5 aussehen, dabei erfolgt eine Trennung in Eingehende (Figur 4) und Ausgehende (Figur 5) Regeln.

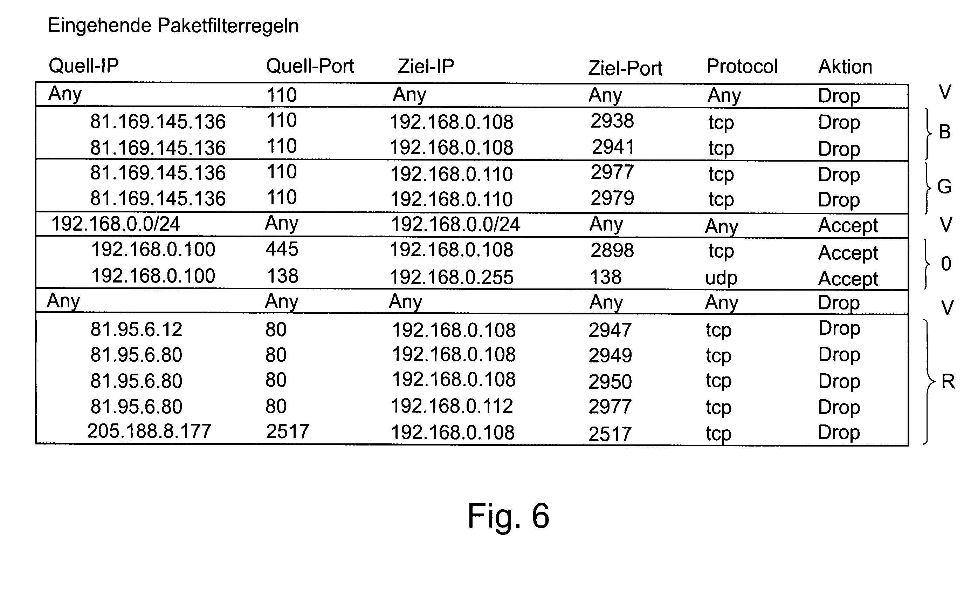

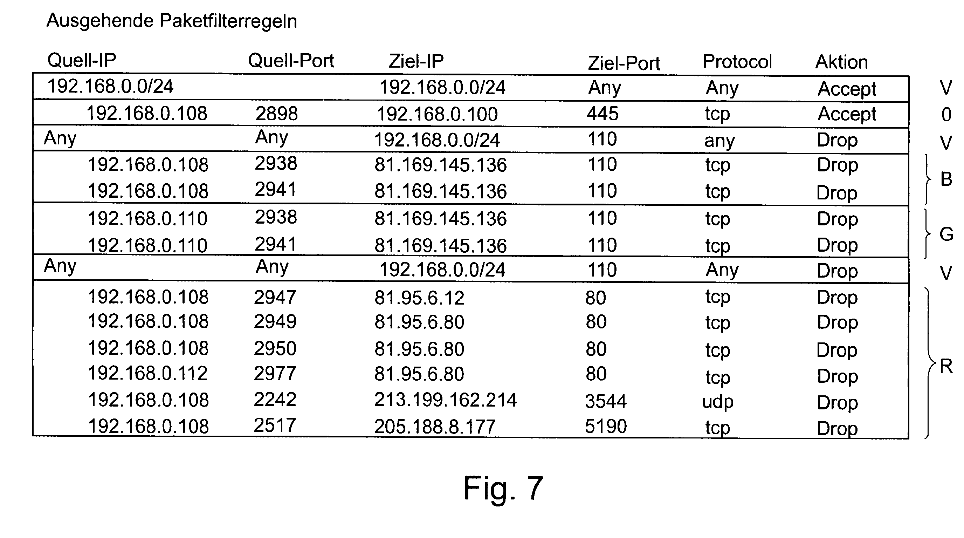

Das hieraus automatisch optimierte und schon bearbeitete Regelset könnte wie in den Figuren 6, 7 (Figur 6: eingehende Paketfilterregeln, Figur 7: ausgehende Paketfilterregeln) abgebildet aussehen. Die zusammengefassten Regeln (hier Violett V) stehen über den Regeln aus denen sie entstanden sind. In diesem Beispiel hat der Anlagenführer den Email-Verkehr auf Port 110 unterbunden und den kompletten Internetverkehr in und aus dem Subnetz. Es ergäbe sich hier sogar noch eine weitere Optimierungsmöglichkeit in dem man die Regeln für den Emailverkehr mit denen für das Internet zusammenfasst.

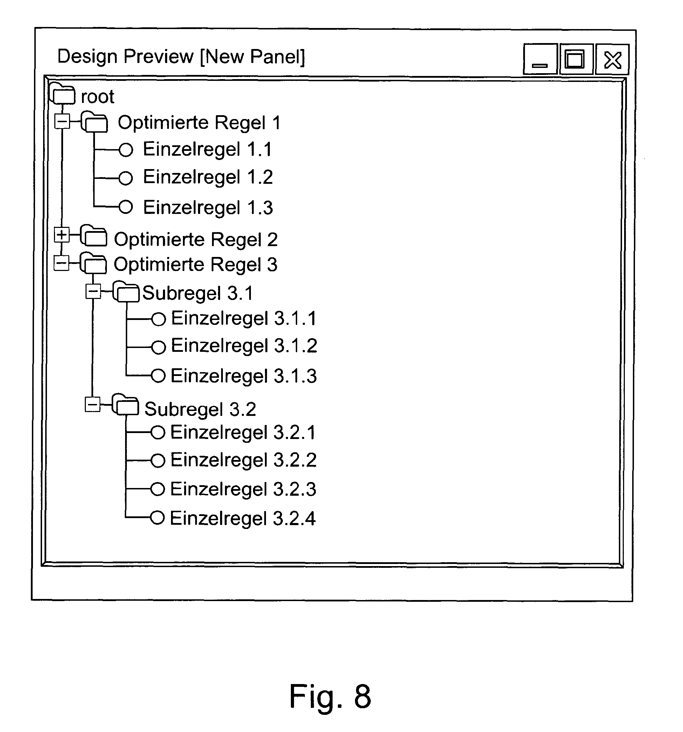

Figur 8 zeigt beispielhaft die grafische Darstellung der sich ergebenden Regeln, wenn das erfindungsgemäße Verfahren durchgeführt worden ist.

Folgende Abkürzungen bzw. Begriffe sind vorstehend verwendet worden:
- **ACA**: Auto Configuration Adapter
- **AVL**: binärer Suchbaum
- **CSV**: Comma Separated Value
- **EAGLE**: Firewallgerät
- **GUI**: Graphical User Interface
- **IP**: Internet Protocol
- **IPv4**: Internet Protocol Version 4
- **MAC**: Media Access Control
- **PC**: Personal Computer
- **TCP**: Transfer Control Protocol
- **TCP/IP**: Transmission Control Protocol/Internet Protocol
- **TELNET**: Telecommunications Network
- **UDP**: User Datagram Protocol
- **VPN**: Virtual Private Network
- **WAN**: Wide Area Network

### Ausgehender Verkehr

### siehe eingehender Verkehr

### Endgerät

Wird ein Netzwerk anhand einer Wurzelbaumstruktur abgebildet, in der die Wurzel und die Knoten Infrastrukturgeräte darstellen, sind die Endgeräte die Blätter dieser Struktur. Sie übernehmen für den Betrieb des Netzwerks keine wichtigen Funktionen, sondern nutzen das Netzwerk als Übertragungsmedium für den Datenaustausch untereinander. Endgeräte können z.B. Pcs, Server oder Busmaster sein.

### Eingehender Verkehr

Im Zusammenhang mit den Firewall-Regeln gibt es für den EAGLE eine spezielle Ausdrucksweise. Die Paketfilterregeln, die unter dem Menü Paketfilter zu finden sind, werden als eingehende und ausgehende Paketfilter bezeichnet. Diese Bezeichnung bezieht sich auf die tatsächliche Richtung des Verkehrs von außen betrachtet, d.h., ob das Paket von extern nach intern oder umgekehrt vermittelt wird. Ausgehender Verkehr meint somit den Verkehr, der am internen Port ankommt und über den externen Port den EAGLE verlässt, also das sichere interne Netz verlässt. Eingehender Verkehr ist Verkehr, der am externen Port ankommt und an den internen Port weitergereicht wird. Da es sich beim EAGLE um ein Zwei-Port-Gerät handelt, wird jeweils der ankommende Verkehr am internen bzw. extern Port gefiltert.

### Infrastrukturgeräte

Dieser Begriff wird in dieser Ausarbeitung für Geräte verwendet, die im Netz Verwaltungs- und Verteilungsfunktionen wahrnehmen. Sie bilden die Knotenpunkte / Wurzeln des Datennetzwerkes. Dies sind beispielsweise Hubs, Switches oder Router. Ein Infrastrukturgerät kann gleichzeitig auch ein Endgerät, im Sinne eines Blattes, eines Netzwerks sein.

### Netzwerk

Im Allgemeinen bezeichnet ein Netzwerk ein System, dessen Struktur sich graphentheoretisch abbilden lässt. Dabei kann es sich z.B. um soziale, elektrische oder technische Netzwerke handeln. In dieser Ausarbeitung steht der Begriff Netzwerk als Synonym für ein "Datennetzwerk" bzw. ein "Computernetzwerk".

### Netzwerkinfrastrukturgeräte

### siehe Infrastrukturgeräte

### VxWorks

Proprietäres Echtzeitbetriebssystem der Firma Wind River Systems. Das Einsatzgebiet sind Kleingeräte und umfasst z.B. Luft-/Raumfahrt, Maschinensteuerungen, Medizintechnik und Netzwerk-Infrastruktur.

## Patentansprüche

1. Verfahren zum Betreiben eines Firewallgerätes in Automatisierungsnetzwerken, wobei das Firewallgerät zwischen zumindest zwei ein oder mehrere Infrastrukturgeräte aufweisende Netzwerken angeordnet und dazu geeignet und ausgebildet ist, Datenverkehr in Abhängigkeit von Regeln zwischen den Netzwerken passieren zu lassen oder die Übertragung zwischen den Netzwerken zu blockieren, und während einer Lernphase aus dem Datenverkehr Daten zu erfassen und Regeln abzuleiten, ohne physikalisch in den Datenverkehr einzugreifen.

2. Verfahren nach Anspruch 1, **dadurch gekennzeichnet, dass** das Firewallgerät ein web-basiertes Interface aufweist, wobei in dem Interface nach der Lernphase die erfassten und abgespeicherten Daten gefiltert werden.

3. Verfahren nach Anspruch 1 oder 2, **dadurch gekennzeichnet, dass** in dem Firewallgerät vor Beginn der Lernphase Default-Regeln abgespeichert und diese Default-Regeln um die während der Lernphase ermittelten Regeln ergänzt oder durch diese ersetzt werden.

4. Verfahren nach einem der vorhergehenden Ansprüche, **dadurch gekennzeichnet, dass** die während der Lernphase abgeleiteten Regeln automatisiert anhand eines Optimierungsalgorithmus auf Plausibilität überprüft werden.

5. Verfahren nach einem der vorhergehenden Ansprüche, **dadurch gekennzeichnet, dass** die während der Lernphase abgeleiteten Regeln von einem Benutzer des Gerätes überprüft und soweit erforderlich bearbeitet werden.

6. Verfahren nach Anspruch 4, **dadurch gekennzeichnet, dass** aus dem Datenverkehr, insbesondere aus den ermittelten Kommunikationsbeziehungen, einzelne Firewall-Regeln gebildet werden, wobei jede Kommunikationsbeziehung eine vorläufige Firewall-Regel ergeben, wobei weiterhin anschließend die Summe der Regeln reduziert werden, um zu einer Optimierung der letztendlich gültigen Firewall-Regeln zu kommen.

7. Verfahren nach einem der vorhergehenden Ansprüche, **dadurch gekennzeichnet, dass** die optimierten Regeln grafisch auf einer Wiedergabeeinheit des Firewallgerätes dem Benutzer angezeigt werden.
